Europäisches Patentamt

**European Patent Office**

**Office européen des brevets**

(11) Veröffentlichungsnummer: **0 023 675**
A1

(12) **EUROPÄISCHE PATENTANMELDUNG**

(21) Anmeldenummer: **80104348.0**

(22) Anmeldetag: **24.07.80**

(51) Int. Cl.³: **C 08 J 3/28,** C 08 L 23/16

(30) Priorität: **02.08.79 NL 7905944**

(43) Veröffentlichungstag der Anmeldung: **11.02.81**
**Patentblatt 81/6**

(84) Benannte Vertragsstaaten: **AT BE CH DE FR GB IT LI SE**

(71) Anmelder: **CHEMISCHE WERKE HÜLS AG, Postfach 1320, D-4370 Marl 1 (DE)**
Anmelder: **UNILEVER-EMERY N.V., Buurtje 1, NL-2802 BE Gouda (NL)**

(72) Erfinder: **Bender, Rüdiger, Dr., Riegestrasse 42, D-4370 Marl (DE)**
Erfinder: **van Veersen, Gerardus Johannes, Dr., Dreef 4, Gouda (NL)**

(54) **Übliche Vernetzungs- und Zusatzstoffe enthaltende Äthylen-alpha-olefin-(dien)-Kautschukmischungen und ihre Vernetzung im Ultrahochfrequenzfeld.**

(57) Verfahren zur Vernetzung von übliche Vernetzungs- und Zusatzstoffe enthaltenden Ethylen-α-Olefin-(Dien)-Kautschuk-Mischungen im Ultrahochfrequenzfeld, indem man den Kautschuk-Mischungen 0,1 bis 100 Gewichtsteile, bezogen auf 100 Gewichtsteile Kautschuk, eines niedermolekularen Nitrils mit einem Molekulargewicht von 100 bis 3000 zusetzt.

0023675

Unilever-Emery N.V.

BEZEICHNUNG GEÄNDERT
siehe Titelseite

Verfahren zur Vernetzung von übliche Vernetzungs- und
Zusatzstoffe enthaltenden Ethylen-$\alpha$-Olefin-(Dien)-
Kautschuk-Mischungen im Ultrahochfrequenzfeld

Die Vernetzung von Kautschukmischungen um Ultrahochfrequenzfeld, im nachfolgenden auch kurz UHF-Feld genannt,
hat sich in den letzten Jahren zu einem Standardverfahren
in der kautschukverarbeitenden Industrie entwickelt. Besondere Bedeutung hat dieses Verfahren in der kontinuierlichen Fertigung von Gummiprofilen erlangt. Voraussetzung
für die Wirtschaftlichkeit des Verfahrens ist eine hinreichend schnelle Aufheizung der Kautschukmischungen im UHF-
Feld. Bei polaren Kautschuken, wie z. B. Nitrilkautschuk
(NBR), ist die Aufnahme der Energie im hochfrequenten
Wechselfeld durch die Polarität der Kautschuke selbst gegeben. Bei unpolaren Kautschuken, wie z. B. Ethylen-Propylen-(Dien)-Kautschuk $/$EP(D)M$/$, Naturkautschuk (NR) und
Styrol-Butadien-Kautschuk (SBR), ist eine hinreichende
Energieaufnahme im elektrischen Wechselfeld nur dann gegeben, wenn Ruß als Füllstoff eingesetzt wird. Mit anderen, hellen mineralischen Füllstoffen versehene Kautschuk-
mischungen auf Basis solcher unpolaren Kautschuke lassen
sich dagegen wegen der relativ geringen Energieaufnahme
dieser Füllstoffe im UHF-Feld nicht hinreichend schnell
aufheizen und vernetzen.

Es ist bekannt, daß die Energieaufnahme heller, auf unpolaren Kautschuken aufgebauter Kautschukmischungen durch

den Zusatz von in der Kautschuktechnologie gängigen polaren Verbindungen, wie Diethylenglykol, Triethanolamin und von polaren Weichmachern, wie z. B. Chlorkohlenwasserstoffe, sowie von Faktissen verbessert werden kann /J. Ippen, Rubber Chem. Technol. 44 (1971), Nr. 1, 294-306/. Derartige Zusätze beeinträchtigen jedoch im allgemeinen die Vernetzungscharakteristik und/oder die Vulkanisateigenschaften sehr stark, wenn sie in der für eine hinreichend schnelle Aufheizung im UHF-Feld erforderlichen Dosierung eingesetzt werden.

Es ist ferner bekannt, daß durch Verschnitte von unpolaren Kautschuken mit polaren Kautschuken eine erhebliche Steigerung der Energieaufnahme im UHF-Feld erzielt werden kann. Nitrilkautschuk ist jedoch als Verschnittkomponente für Ethylen-Propylen-(Dien)-Kautschuke nicht geeignet, da die typischen Vulkanisateigenschaften des EP(D)M dadurch stark beeinträchtigt werden.

Es besteht also noch immer ein Bedürfnis nach einem Verfahren zum schnellen Aufheizen und Vernetzen von unpolaren Kautschuken im UHF-Feld, wobei die guten Eigenschaften des Vulkanisats beibehalten werden.

Aufgabe der Erfindung war es daher, ein neues Herstellungsverfahren für Profile aus unpolaren Ethylen-$\alpha$-Olefin-(Dien)-Kautschuk-Mischungen, insbesondere für helle Profile, zu entwickeln, mit dem im UHF-Feld schnelle Aufheizung erzielt und somit der Durchsatz erhöht wird, ohne daß die Eigenschaften der Vernetzungsprodukte beeinträchtigt werden.

Die Erfindung betrifft demnach ein Verfahren zur Vernetzung von Ethylen-$\alpha$-Olefin-(Dien)-Kautschuk-Mischungen im Ultrahochfrequenzfeld, das dadurch gekennzeichnet ist, daß man den Kautschukmischungen 0,1 bis 100 Gewichtsteile, bezogen auf 100 Gewichtsteile Kautschuk, eines niedermolekularen Nitrils mit einem Molekulargewicht von 100 bis 3 000 zusetzt. Vorzugsweise werden 1 bis 50, insbesondere 5 bis 30 Gewichtsteile Nitril, bezogen auf 100 Gewichtsteile

0023675

Kautschuk, zugesetzt.

Die Erfindung betrifft weiter die Verwendung von niedermolekularen Nitrilen mit einem Molekulargewicht von 100 bis 3 000 als Mischungsbestandteile von Ethylen-$\alpha$-Olefin-(Dien)-Kautschuk-Mischungen, welche im Ultrahochfrequenzfeld vernetzt werden.

Die Erfindung betrifft weiter vulkanisierbare Ethylen-$\alpha$-Olefin-(Dien)-Kautschuk-Mischungen, die 0,1 bis 100 Gewichtsteile, bezogen auf 100 Gewichtsteile Kautschuk, eines niedermolekularen Nitrils mit einem Molekulargewicht von 100 bis 3 000 enthalten.

Die Erfindung betrifft weiter noch bevorzugt helle Formstücke, wie Profile aus unpolaren Ethylen-$\alpha$-Olefin-(Dien)-Kautschuken, welche niedermolekulare Nitrile mit einem Molekulargewicht von 100 bis 3 000 als Mischungsbestandteile in Mengen von 0,1 bis 100 Gewichtsteile, bezogen auf 100 Gewichtsteile Kautschuk, enthalten.

Die Nitrile, welche gemäß der Erfindung eingesetzt werden können, sind solche mit einem Molekulargewicht von mindestens 100, vorzugsweise mindestens 125, und höchstens 3 000, vorzugsweise 1 500, insbesondere 1 000. Die Nitrile können eine oder mehrere Nitrilgruppen im Molekül enthalten, z. B. Nitrile mit einem Verhältnis CN-Gruppe(n) zur Anzahl der Kohlenstoffatome im organischen Rest von 1 : 2 bis 1 : 30, vorzugsweise 1 : 3 bis 1 : 25. Weiter werden solche Nitrile bevorzugt, welche nur Kohlenstoff-, Wasserstoff- und Stickstoffatome enthalten, wobei der Kohlenwasserstoffrest des Nitrils aliphatisch, cycloaliphatisch, aromatisch oder araliphatisch sein kann.

Typische niedermolekulare Nitrile sind Heptylnitril, Octylnitril, Pelargonnitril, 2-Phenylpropylnitril, Naphthonitril, Stearylnitril, Adipindinitril, Azelaindinitril, Monomernitril, Dimerdinitril, Trimertrinitril (unter Monomernitril, Dimerdinitril, Trimertrinitril versteht man

- 4 -    O.Z. 3546

Nitrile, die sich von Fettsäuren mit 12 bis 22 Kohlenstoffatomen sowie deren Polymeren ableiten) und niedermolekulare Copolymerisate des Acrylnitrils. Die Fettsäuren bzw. Dimernitrile können wie in Beilstein, Bd. II, Syst.nummer 152-194, Seite 384, beschrieben, hergestellt werden.

Unter Ethylen-$\alpha$-Olefin-(Dien)-Kautschuken werden die Copolymere aus Ethylen und einem oder mehreren $\alpha$-Olefinen mit 3 bis 8 C-Atomen, vornehmlich Propylen, und gegebenenfalls einem oder mehreren nicht-konjugierten Dienen verstanden. Sie können nach bekannten Verfahren des Standes der Technik (DE-ASS 15 70 352, 15 95 442, 17 20 450 und DE-OS 24 27 343) hergestellt werden.

Besonders bevorzugt sind ungesättigte Polyolefinkautschuke (EPDM), die aus 15 bis 90 Gewichtsprozent, vorzugsweise 30 bis 75 Gewichtsprozent Ethylen und aus 85 bis 10 Gewichtsprozent, vorzugsweise 70 bis 25 Gewichtsprozent Propylen und/oder Buten-(1) und aus einem oder mehreren nicht-konjugierten Dienen bestehen, und zwar in einer solchen Menge, daß in den Kautschuken 0,5 bis 30 Doppelbindungen/1 000 C-Atome enthalten sind. Besonders bevorzugte nicht-konjugierte Diene sind cis- und trans-Hexadien-(1,4), Dicyclopentadien, 5-Methylen, 5-Ethyliden- und 5-Isopropyliden-2-norbornen.

In der Regel können die niedermolekularen Nitrile ohne besonderen Arbeitsgang gleichzeitig mit der Einarbeitung der in der Kautschuktechnologie üblichen Zusatzstoffe und Vernetzungsmittel mittels Walzwerk oder Innenmischer eingemischt werden.

Als Vernetzungsagenzien kommen in erster Linie Schwefel und/oder Schwefelspender, wie z. B. Tetramethyl-thiuramtetrasulfid, in Kombination mit den bekannten Vulkanisationsbeschleunigern unter Zusatz von Zinkoxid und höheren Fettsäuren, wie z. B. Stearinsäure, infrage. Die zur Vernetzung von Kautschuken üblichen Peroxide können ebenfalls eingesetzt werden, jedoch muß dann dafür Sorge getragen werden, daß die Oberfläche des zu vernetzenden Körpers während des Vernetzungsvorgangs nicht mit Luftsauerstoff in Berührung kommt.

Als Zusatzstoffe sind in erster Linie Füllstoffe, Weichmacher, Verarbeitungshilfsmittel und Alterungsschutzmittel zu nennen. Als Füllstoffe kommen dabei Ruße sämtlicher Aktivitätsstufen sowie vornehmlich die üblicherweise verwendbaren mineralischen Produkte, wie z. B. Kreide, Silikate und Kieselsäuren, infrage. Als Weichmacher sind die bekannten Raffinerieprodukte zu nennen. Dabei können Öle mit vorwiegend naphthenischen oder paraffinischen Bestandteilen Verwendung finden.

Verarbeitungshilfsmittel sind z. B. Faktisse und Zinksalze von höheren Fettsäuren. Schließlich können die für den jeweiligen Verwendungszweck des Vulkanisats erforderlichen Alterungsschutzmittel und Wachse beigefügt werden.

Die Vernetzungsmittel, Zusatzstoffe und Verarbeitungshilfsmittel werden in den in der kautschukverarbeitenden Industrie üblichen Mengen zugesetzt.

Die Vernetzungsreaktion wird durch Erwärmen des zu vernetzenden Körpers in einem UHF-Feld eingeleitet und gegebenenfalls beendet.

Man geht z. B. bei der kontinuierlichen Verfahrensweise in der Regel so vor, daß man die fertige Kautschukmischung extrudiert und das Extrudat durch einen nachgeschalteten handelsüblichen UHF-Kanal, dem üblicherweise ein Heißluft-

O.Z. 3546

kanal nachgeschaltet ist, leitet. Das UHF-Feld wird im allgemeinen mit Frequenzen im Bereich von $10^3$ MHz betrieben. Die Abzugsgeschwindigkeit der Extrudate, die letztlich die Wirtschaftlichkeit des Verfahrens bestimmen, hängt von der Extrudierbarkeit der Kautschukmischungen und der Aufheizgeschwindigkeit der Extrudate im UHF-Feld ab und läßt sich durch einige orientierende Versuche optimal einstellen; ebenso erfordert die Erzielung bzw. Einstellung optimaler Temperaturen im Bereich des UHF-Feldes und des Heißluftkanals entsprechende Versuche.

Die nach dem erfindungsgemäßen Verfahren hergestellten Vulkanisate, vornehmlich Profile, eignen sich für die bekannten Einsatzzwecke (z. B. Dichtungen) auf dem Bausektor und im Automobilbau.

Die Erfindung wird durch die nachfolgenden Beispiele näher erläutert.

Vergleichsbeispiel A und Beispiele 1 und 2

Die nachfolgend aufgeführten EPDM-Mischungen wurden auf einer handelsüblichen Walze (Troester-Walze, Durchmesser 200 mm, Länge 450 mm) mit einer Friktion von 24 : 28 und einer Kühlwassertemperatur von 50 °C auf die in der Kautschukindustrie übliche Weise hergestellt, wobei das Nitril zusammen mit den Füllstoffen und gegebenenfalls dem Mineralöl eingemischt wurde:

| Beispiel bzw. Vgl.Beispiel | A | 1 | 2 |
|---|---|---|---|
| EPDM (BUNA® AP 451) | 100,0 | 100,0 | 100,0 |
| Zinkoxid | 5,0 | 5,0 | 5,0 |
| Stearinsäure | 2,0 | 2,0 | 2,0 |
| Handelsübl. Kieselsäure | 35,0 | 35,0 | 35,0 |
| Handelsübl. Kieselerde | 100,0 | 100,0 | 100,0 |
| Handelsübl. paraff. Mineralöl | 40,0 | 25,0 | - |
| Diethylenglykol | 2,0 | 2,0 | 2,0 |
| Polyethylenglykol (Polywachs 6000) | 3,0 | 3,0 | 3,0 |
| Handelsübl. Silan (POLYVEST® 25) | 2,0 | 2,0 | 2,0 |

0023675

| Beispiel bzw. Vgl.Beispiel | A | 1 | 2 |
|---|---|---|---|
| Titandioxid | 10,0 | 10,0 | 10,0 |
| Heptylnitril | - | 25,0 | 50,0 |
| Zinkdibutyldithiocarbamat | 1,5 | 1,5 | 1,5 |
| Tetramethylthiuramtetrasulfid | 2,0 | 2,0 | 2,0 |
| Zink-N-diethyldithiocarbamat | 0,8 | 0,8 | 0,8 |
| Tetramethylthiuramdisulfid | 0,8 | 0,8 | 0,8 |
| Schwefel | 0,4 | 0,4 | 0,4 |
| Handelsübl. Calciumoxid | 10,0 | 10,0 | 10,0 |

BUNA® AP 451 ist ein Ethylen-Propylen-5-Ethyliden-2-nor-bornen-Terpolymerisat mit einer Mooney-Viskosität ML 1 + 4 bei 100 °C von 95 und statistischer Verteilung der Monomeren.

Die Mischungen wurden anschließend auf einem 6 D Extruder mit einer Schneckendrehzahl von 15 Upm zu einem Strang mit 45 bis 50 mm Durchmesser extrudiert und in 50 mm lange Stücke geschnitten. Die so erhaltenen zylindrischen Probekörper wurden zur Messung der Energieaufnahme im UHF-Feld jeweils einzeln in ein Menschner UHF-Vorwärmgerät, Bauart MV 300, (Netzspannung 220 V, Nennaufnahme 1,28 KW, UHF-Frequenz 2 450 MHz, UHF-Leistung 0 bis 650 W regelbar) gestellt und ihre Erwärmung im UHF-Feld bei 650 W Leistung nach regelmäßigen Zeitabständen mit einem Einstichthermometer gemessen. Das Experiment wurde jeweils dreimal durchgeführt und als Versuchsergebnis das arithmetische Mittel der Temperaturmessungen nach den vorgegebenen Zeitabständen zugrunde gelegt. An den o. a. Mischungen wurden auf diese Weise nach 30, 60 und 120 Sekunden folgende Temperaturen erhalten:

| Beispiel bzw. Vgl.Beispiel | A | 1 | 2 |
|---|---|---|---|
| Temperatur (°C) im UHF-Feld nach 30" | 36 | 64 | 83 |
| Temperatur (°C) im UHF-Feld nach 60" | 42 | 94 | 117 |
| Temperatur (°C) im UHF-Feld nach 120" | 57 | 144 | 174 |

Die Meßwerte zeigen, daß Mischung A, die kein Nitril enthält, selbst nach 120 Sekunden Verweilzeit im UHF-Feld noch nicht die Temperaturen erreicht hat, welche die 25 und 50 phr Heptylnitril enthaltenden Mischungen schon nach 30 Sekunden erreicht haben und daß ferner die Aufheizgeschwindigkeit mit dem Nitrilgehalt der Mischungen zunimmt.

Die nachfolgend aufgeführten kautschuktechnologischen Daten wurden auf die in der Kautschukindustrie üblichen Weise nach den entsprechenden DIN-Vorschriften ermittelt und zeigen, daß die Vulkanisateigenschaften durch das Nitril nur unwesentlich beeinflußt werden.

| Beispiel bzw. Vgl.Beispiel | | A | 1 | 2 |
|---|---|---|---|---|
| Vulkameter 180 °C　　t$_{10}$ (min) | | 1,3 | 1,3 | 1,3 |
| (DIN 53 529)　　　　　t$_{90}$ (min) | | 3,0 | 2,6 | 2,6 |
| Vulkanisation: 10' bei 180 °C | | | | |
| Zugfestigkeit (DIN 53 504) | MPa | 8,3 | 8,4 | 7,0 |
| Bruchdehnung (DIN 53 504) | % | 612 | 631 | 417 |
| Spannungswert 300 % Dehnung | MPa | 4,3 | 4,1 | 5,9 |
| (DIN 53 504) | | | | |
| Härte (DIN 53 505) | Shore A | 63 | 65 | 74 |
| Stoßelastizität (DIN 53 512) | % | 41 | 45 | 47 |
| Compr. set B 24 h - 70 °C | % | 31 | 30 | 32 |
| (DIN 53 517) | | | | |
| Compr. set B 24 h - 100 °C | % | 56 | 51 | 54 |
| (DIN 53 517) | | | | |

**Beispiele 3 und 4**

Die nachfolgend aufgeführten EPDM-Mischungen unterscheiden sich von den EPDM-Mischungen 1 und 2 in Beispiel 1 nur durch die Art und Menge des eingesetzten Nitrils. Als Nitril wurde hier Octylnitril verwendet. Die Mischungsherstellung und Prüfung erfolgte wie im Beispiel 1.

| Beispiel | 3 | 4 |
|---|---|---|
| EPDM (BUNA® AP 451) | 100,0 | 100,0 |
| Zinkoxid | 5,0 | 5,0 |
| Stearinsäure | 2,0 | 2,0 |
| Handelsübl. Kieselsäure | 35,0 | 35,0 |
| Handelsübl. Kieselerde | 100,0 | 100,0 |
| Handelsübl. paraff. Mineralöl | 40,0 | 25,0 |
| Diethylenglykol | 2,0 | 2,0 |
| Polyethylenglykol (Polywachs 6 000) | 3,0 | 3,0 |
| Handelsübl. Silan (POLYVEST® 25) | 2,0 | 2,0 |
| Titandioxid | 10,0 | 10,0 |
| Octylnitril | 10,0 | 25,0 |
| Zinkdibutyldithiocarbamat | 1,5 | 1,5 |
| Tetramethylthiuramtetrasulfid | 2,0 | 2,0 |
| Zink-N-diethyldithiocarbamat | 0,8 | 0,8 |
| Tetramethylthiuramdisulfid | 0,8 | 0,8 |
| Schwefel | 0,4 | 0,4 |
| Handelsübl. Calciumoxid | 10,0 | 10,0 |
| Temperatur (°C) im UHF-Feld nach:  30" | 49 | 59 |
| 60" | 73 | 88 |
| 120" | 116 | 137 |
| Vulkameter 180 °C  $t_{10}$ (min) | 1,3 | 1,3 |
| $t_{90}$ (min) | 2,8 | 2,6 |
| Vulkanisation: 10' bei 180 °C | | |
| Zugfestigkeit          MPa | 7,3 | 7,4 |
| Bruchdehnung          % | 669 | 672 |
| Spannungswert 300 % Dehnung   MPa | 3,4 | 3,4 |
| Härte          Shore A | 61 | 61 |
| Stoßelastizität          % | 44 | 45 |
| Compr. set B 24 h - 70 °C   % | 26 | 27 |
| Compr. set B 24 h - 100 °C   % | 51 | 53 |

Dieses Beispiel zeigt, daß Octylnitril eine ähnlich schnelle Aufheizung der EPDM-Mischung im UHF-Feld wie Heptylnitril bewirkt und die Vulkanisateigenschaften der EPDM-Mischung nicht wesentlich beeinflußt.

O.Z. 3546

## Beispiele 5 bis 12

Weitere, analog dem Beispiel 1 mit der gleichen EPDM-Basismischung geprüften Nitrile sind in der nachfolgenden Tabelle aufgeführt. Die Mischungsherstellung und Prüfung im UHF-Feld erfolgte wie im Beispiel 1.

| Beisp. | Nitril | Dosierung (Gew.teile) | Mischungstemperatur ($^{o}$C) im UHF-Feld nach | | |
|---|---|---|---|---|---|
| | | | 30" | 60" | 120" |
| 5 | Pelargonnitril | 10 | 28 | 36 | 54 |
| | | 25 | 34 | 53 | 90 |
| | | 50 | 55 | 94 | 157 |
| 6 | Adipindinitril | 10 | 38 | 55 | 81 |
| | | 25 | 54 | 87 | 126 |
| 7 | Azelaindinitril | 10 | 35 | 50 | 76 |
| | | 25 | 39 | 66 | 113 |
| 8 | Monomernitril | 10 | 37 | 51 | 75 |
| | | 25 | 42 | 61 | 90 |
| | | 50 | 55 | 93 | 137 |
| 9 | Dimerdinitril | 10 | 40 | 53 | 83 |
| | | 25 | 52 | 76 | 119 |
| | | 50 | 57 | 92 | 147 |
| 10 | Stearylnitril | 10 | 41 | 57 | 85 |
| | | 25 | 52 | 74 | 113 |
| | | 50 | 61 | 97 | 152 |
| 11 | 2-Phenylpropylnitril | 5 | 43 | 63 | 100 |
| | | 10 | 46 | 71 | 112 |
| 12 | $\alpha$-Naphthonitril | 5 | 46 | 66 | 108 |
| | | 10 | 51 | 81 | 131 |

## Vergleichsbeispiel B und Beispiele 13 bis 16

Die nachfolgenden EPDM-Mischungen unterscheiden sich von den bisher aufgeführten in der Art und Menge der als Zusatzstoffe eingesetzten mineralischen Füllstoffe. Die Herstellung und Prüfung der Mischungen erfolgte wie im Beispiel 1 beschrieben.

| Beispiel bzw. Vgl. Beispiel | B | 13 | 14 | 15 | 16 |
|---|---|---|---|---|---|
| EPDM (BUNA® AP 451) | 100,0 | 100,0 | 100,0 | 100,0 | 100,0 |
| Zinkoxid | 5,0 | 5,0 | 5,0 | 5,0 | 5,0 |
| Stearinsäure | 1,0 | 1,0 | 1,0 | 1,0 | 1,0 |
| Handelsübl. hochaktives Silikat | 70,0 | 70,0 | 70,0 | 70,0 | 70,0 |
| Handelsübl. Silikat (80 % $SiO_2$) | 70,0 | 70,0 | 70,0 | 70,0 | 70,0 |
| Handelsübl. paraff. Mineralöl | 30,0 | 30,0 | 30,0 | 30,0 | 30,0 |
| Diethylenglykol | 2,0 | 2,0 | 2,0 | 2,0 | 2,0 |
| Polyethylenglykol (Polywachs 4000) | 3,0 | 3,0 | 3,0 | 3,0 | 3,0 |
| Titandioxid | 10,0 | 10,0 | 10,0 | 10,0 | 10,0 |
| Handelsübl. Silan (POLYVEST® 25) | 3,0 | 3,0 | 3,0 | 3,0 | 3,0 |
| 2-Phenylpropylnitril | - | 5,0 | 10,0 | - | - |
| α-Naphthonitril | - | - | - | 5,0 | 10,0 |
| Zinkdibutyldithiocarbamat | 2,0 | 2,0 | 2,0 | 2,0 | 2,0 |
| Handelsübl. Vulk.verzögerer | 0,8 | 0,8 | 0,8 | 0,8 | 0,8 |
| Tetramethylthiuramdisulfid | 0,7 | 0,7 | 0,7 | 0,7 | 0,7 |
| Morpholindisulfid | 1,5 | 1,5 | 1,5 | 1,5 | 1,5 |
| Dibenzothiazyldisulfid | 1,0 | 1,0 | 1,0 | 1,0 | 1,0 |
| Schwefel | 0,5 | 0,5 | 0,5 | 0,5 | 0,5 |
| Handelsübl. Calciumoxid | 10,0 | 10,0 | 10,0 | 10,0 | 10,0 |
| Temperatur (°C) im UHF-Feld nach: 30" | 41 | 44 | 59 | 46 | 54 |
| 60" | 58 | 70 | 91 | 76 | 88 |
| 120" | 94 | 124 | 158 | 142 | 154 |

Die nachfolgenden kautschuktechnologischen Daten wurden wie im Beispiel 1 ermittelt.

| Beispiel bzw. Vgl.Beispiel | | B | 13 | 14 | 15 | 16 |
|---|---|---|---|---|---|---|
| Vulkameter 180 °C $t_{10}$ (min) | | 1,4 | 1,6 | 1,7 | 1,6 | 1,6 |
| $t_{90}$ (min) | | 3,2 | 3,3 | 3,2 | 3,4 | 3,1 |
| Vulkanisation: 10' bei 180 °C | | | | | | |
| Zugfestigkeit | MPa | 8,6 | 8,4 | 7,8 | 8,0 | 7,4 |
| Bruchdehnung | % | 402 | 418 | 385 | 390 | 364 |
| Spannungswert 300 % Dehnung | MPa | 6,8 | 6,5 | 6,4 | 6,5 | 6,2 |
| Härte | Shore A | 80 | 78 | 76 | 78 | 76 |
| Stoßelastizität | % | 34 | 35 | 35 | 34 | 35 |
| Compr. set B 24 h - 70 °C | % | 41 | 40 | 41 | 42 | 40 |
| Compr. set B 24 h - 100 °C | % | 65 | 66 | 68 | 67 | 68 |

<u>Vergleichsbeispiel C und Beispiel 17</u>

Die nachfolgenden Ruß als Füllstoff enthaltenden EPDM-Mischungen wurden wie im Beispiel 1 beschrieben hergestellt und geprüft, wobei zur Erwärmung im UHF-Feld eine Leistung von 320 W vorgegeben wurde.

| Beispiel bzw. Vgl.Beispiel | C | 17 |
|---|---|---|
| EPDM (BUNA® AP 451) | 100,0 | 100,0 |
| Zinkoxid | 5,0 | 5,0 |
| Stearinsäure | 1,0 | 1,0 |
| FEF-Ruß, N 550 | 80,0 | 80,0 |
| SRF-Ruß, N 774 | 30,0 | 30,0 |
| Handelsübl. paraff. Mineralöl | 65,0 | 65,0 |
| Polyethylenglykol (Polywachs 4000) | 3,0 | 3,0 |
| Diethylenglykol | 2,0 | 2,0 |
| Azelaindinitril | - | 5,0 |
| Tellurdiethyldithiocarbamat | 0,5 | 0,5 |
| Tetramethylthiuramdisulfid | 0,8 | 0,8 |
| Schwefel | 0,8 | 0,8 |
| Tetramethylthiurammonosulfid | 0,8 | 0,8 |
| Zinkdibutyldithiocarbamat | 1,2 | 1,2 |
| Dibenzothiazyldisulfid | 1,0 | 1,0 |
| Handelsübl. Calciumoxid | 5,0 | 5,0 |

| Beispiel bzw. Vgl.Beispiel | | C | 17 |
|---|---|---|---|
| Temperatur (°C) im UHF-Feld nach: | 15" | 63 | 71 |
| | 30" | 102 | 109 |
| | 45" | 132 | 141 |
| | 60" | 161 | 177 |

Die nachfolgenden kautschuktechnologischen Daten wurden wie im Beispiel 1 ermittelt.

| Beispiel bzw. Vgl.Beispiel | | C | 17 |
|---|---|---|---|
| Vulkameter 180 °C   $t_{10}$ (min) | | 1,5 | 1,6 |
| $t_{90}$ (min) | | 3,5 | 3,5 |
| Vulkanisation: 10' bei 180 °C | | | |
| Zugfestigkeit | MPa | 9,5 | 9,8 |
| Bruchdehnung | % | 518 | 622 |
| Spannungswert 300 % Dehnung | MPa | 6,1 | 4,9 |
| Härte | Shore A | 60 | 58 |
| Stoßelastizität | % | 38 | 39 |
| Compr. set B 22 h - 70 °C | % | 21 | 26 |

Patentansprüche:

1. Verfahren zur Vernetzung von übliche Vernetzungs- und Zusatzstoffe enthaltenden Ethylen-$\alpha$-Olefin-(Dien)-Kautschuk-Mischungen im Ultrahochfrequenzfeld, dadurch gekennzeichnet, daß man den Kautschuk-Mischungen 0,1 bis 100 Gewichtsteile, bezogen auf 100 Gewichtsteile Kautschuk, eines niedermolekularen Nitrils mit einem Molekulargewicht von 100 bis 3 000 zusetzt.

2. Verwendung von 0,1 bis 100 Gewichtsteilen, bezogen auf 100 Gewichtsteile Kautschuk, eines niedermolekularen Nitrils mit einem Molekulargewicht von 100 bis 3 000 als Mischungsbestandteile von im Ultrahochfrequenzfeld vernetzbaren Ethylen-$\alpha$-Olefin-(Dien)-Kautschuk-Mischungen.

3. Vulkanisierbare Ethylen-$\alpha$-Olefin-(Dien)-Kautschuk-Mischungen, dadurch gekennzeichnet, daß sie 0,1 bis 100 Gewichtsteile, bezogen auf 100 Gewichtsteile Kautschuk, eines niedermolekularen Nitrils mit einem Molekulargewicht von 100 bis 3 000 enthalten.

4. Formstücke, dadurch gekennzeichnet, daß sie aus Ethylen-$\alpha$-Olefin-(Dien)-Kautschuk-Mischungen aufgebaut sind, die 0,1 bis 100 Gewichtsteile, bezogen auf 100 Gewichtsteile Kautschuk, eines niedermolekularen Nitrils mit einem Molekulargewicht von 100 bis 3 000 enthalten.

5. Verfahren, Verwendung, vulkanisierbare Ethylen-$\alpha$-Olefin-(Dien)-Kautschuk-Mischungen bzw. Formstücke nach den Ansprüchen 1 bis 4,
dadurch gekennzeichnet,
daß man den Kautschuk-Mischungen 1 bis 50 Gewichtsteile, bezogen auf 100 Gewichtsteile Kautschuk, eines niedermolekularen Nitrils mit einem Molekulargewicht von 100 bis 3 000 zusetzt.

6. Verfahren, Verwendung, vulkanisierbare Ethylen-$\alpha$-Olefin-(Dien)-Kautschuk-Mischungen bzw. Formstücke nach Anspruch 5,
dadurch gekennzeichnet,
daß man den Kautschuk-Mischungen 5 bis 30 Gewichtsteile, bezogen auf 100 Gewichtsteile Kautschuk, eines niedermolekularen Nitrils mit einem Molekulargewicht von 100 bis 3 000 zusetzt.

7. Verfahren, Verwendung, vulkanisierbare Ethylen-$\alpha$-Olefin-(Dien)-Kautschuk-Mischungen bzw. Formstücke nach den Ansprüchen 1 bis 6,
dadurch gekennzeichnet,
daß man ein niedermolekulares Nitril mit einem Molekulargewicht von 100 bis 1 500 einsetzt.

8. Verfahren, Verwendung, vulkanisierbare Ethylen-$\alpha$-Olefin-(Dien)-Kautschuk-Mischungen bzw. Formstücke nach Anspruch 7,
dadurch gekennzeichnet,
daß man ein niedermolekulares Nitril mit einem Molekulargewicht von 125 bis 1 000 einsetzt.

O.Z. 3546

9. Verfahren, Verwendung, vulkanisierbare Ethylen-$\alpha$-Olefin-(Dien)-Kautschuk-Mischungen bzw. Formstücke nach den Ansprüchen 1 bis 8, dadurch gekennzeichnet, daß man Nitrile mit einem Verhältnis CN-Gruppe(n) zur Anzahl der Kohlenstoffatome im Kohlenwasserstoffrest von 1 : 3 bis 1 : 25 einsetzt.

10. Verfahren, Verwendung, vulkanisierbare Ethylen-$\alpha$-Olefin-(Dien)-Kautschuk-Mischungen bzw. Formstücke nach den Ansprüchen 1 bis 9, dadurch gekennzeichnet, daß man Nitrile einsetzt, welche nur Kohlenstoff-, Wasserstoff- und Stickstoffatome enthalten.

Europäisches Patentamt

**EUROPÄISCHER RECHERCHENBERICHT**

0023675

Nummer der Anmeldung

EP 80 10 x3-8

| | EINSCHLÄGIGE DOKUMENTE | | KLASSIFIKATION DER ANMELDUNG (Int Cl.) |
|---|---|---|---|
| Kategorie | Kennzeichnung des Dokuments mit Angabe, soweit erforderlich, der maßgeblichen Teile | betrifft Anspruch | |
| | <u>GB - A - 607 690</u> (DUNLOP) <br> * Anspruch 1; Seite 3, Zeile 31 * | 1-15 | C 08 J  3/28 <br> C 08 L 23/16 |
| | <u>FR - A - 2 145 407</u> (C. GOLDMAN) <br> * Ansprüche 1,5,9,20; Seite 16, Zeilen 39-40 * | 1-15 | |
| A | <u>EP - A - 0 002 154</u> (COMPAGNIE FRANCAISE DE RAFFINAGE) <br> * Anspruch 6 * | | **RECHERCHIERTE SACHGEBIETE (Int. Cl.)** <br><br> C 08 J  3/28 <br> C 08 L 23/16 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort. | Abschlußdatum der Recherche | Prüfer |
|---|---|---|
| Den Haag | 17-10-1980 | V. HUMBEECK |

EPA form 1503.1   06.78